# EUROPÄISCHE PATENTSCHRIFT

(11) **EP 0 383 050 B1**
(45) Veröffentlichungstag und Bekanntmachung des Hinweises auf die Patenterteilung: **10.11.1993**
(21) Anmeldenummer: 90101179.1
(22) Anmeldetag: 22.01.1990
(51) Int. Cl.: B60T 13/575

(54) **Unterdruck-Bremskraftverstärker**
Vacuum servo brake
Servofrein à vide

(30) Priorität: 16.02.1989 DE 3904641
(43) Veröffentlichungstag der Anmeldung: 22.08.1990
(73) Patentinhaber: ITT Automotive Europe GmbH, 60488 Frankfurt (DE)
(72) Erfinder: Rüffer, Manfred, D-6231 Sulzbach (DE); Töpperwien, Bernd, D-6101 Rossdorf 1 (DE); Dusil, Vladimir, D-6108 Weiterstadt (DE)

(56) Entgegenhaltungen:
- DE-A- 3 505 626
- FR-A- 2 456 017
- GB-A- 2 095 351

## Beschreibung

Die Erfindung betrifft einen Unterdruck-Bremskraftverstärker für Kraftfahrzeuge, mit einem Gehäuse, das durch mindestens eine mittels einer Rückstellfeder vorgespannte axial bewegliche Wand in mindestens eine Unterdruckkammer und mindestens eine Arbeitskammer dichtend unterteilt ist, mit einem mechanisch betätigbaren Steuerventil zur Verbindung der Arbeitskammer mit der Unterdruckkammer bzw. mit der Atmosphäre, dessen axial bewegliches Steuerventilgehäuse aus thermoplastischem Kunststoff ausgebildet ist und mit einem Metalltopf versehen ist, der eine gummielastische Reaktionsscheibe sowie eine daran anliegende Druckstange aufnimmt, die die Bremskraft auf einen Betätigungskolben eines unterdruckseitig am Gehäuse des Unterdruck-Bremskraftverstärkers angebrachten Hauptzylinders überträgt, wobei der Metalltopf an der Stirnseite des Steuerventilgehäuses axial abgestützt ist.

Bei einem derartigen, aus der DE-OS 35 05 626 bekannten Unterdruck-Bremskraftverstärker wird der Metalltopf in der Anlage an der Stirnseite des Steuerventilgehäuses durch eine mit Öffnungen versehene Ringscheibe gehalten, die sich an einer ringförmigen radialen Eindrückung einer die zweite bewegliche Wand tragenden metallischen Hülse abstützt, deren radialer Kragen mittels eines Führungsrohres am Steuerventilgehäuse gesichert ist. Eine derartige Befestigung ist bei einem lediglich eine bewegliche Wand aufweisenden Unterdruck-Bremskraftverstärker nicht denkbar und außerdem nur bei Geräten in Tandemausführung sinnvoll.

Es ist daher Aufgabe der vorliegenden Erfindung, bei einem Unterdruck-Bremskraftverstärker der eingangs genannten Gattung eine einfache, kostengünstig herstellbare, montagefreundliche Fixierung des Metalltopfes am bzw. im Steuerventilgehäuse unter Beibehaltung der hohen Betriebssicherheit des Bremskraftverstärkers vorzuschlagen.

Diese Aufgabe wird erfindungsgemäß dadurch gelöst, daß der Metalltopf mittels einer Halteklammer gehalten wird, die durch einen U-förmigen Bügel gebildet ist, in dessen mittlerem Bereich eine Durchtrittsöffnung für die Druckstange ausgebildet ist und dessen Arme mit ihren Enden zwei am Steuerventilgehäuse radial gegenüberliegend ausgebildete Vorsprünge hintergreifen. Durch diese Maßnahme wird eine wirkungsvolle Führung bzw. Sicherung der Druckstange gegen Herausfallen erreicht.

Eine erhebliche Vereinfachung der Steuergruppe des erfindungsgemäßen Unterdruck-Bremskraftverstärkers wird dadurch erreicht, das das Steuerventilgehäuse im Abstützbereich des Metalltopfes einen ringförmigen Bund aufweist, dessen Höhe geringfügig größer ist als die Materialdicke des Metalltopfes ist und der eine Dichtfläche bildet, die mit der Reaktionsscheibe zusammenwirkt.

Eine Erhöhung der Betriebssicherheit wird nach einem weiteren vorteilhaften Erfindungsmerkmal dadurch erreicht, daß die Arme des Stahlbügels durch einen die bewegliche Wand bildenden, am Steuerventilgehäuse befestigten Membranteller radial gesichert sind.

Eine erhebliche Verbesserung der Führung des Steuerventilgehäuses bzw. Verringerung der Ausknickgefahr der Druckstange wird insbesondere bei einem Bremskraftverstärker in Tandemausführung, dessen Gehäuse durch eine Trennwand in einen vorderen und einen hinteren Verstärkerraum unterteilt ist, mit einer am Steuerventilgehäuse angeordneten ersten beweglichen Wand, die den vorderen Verstärkerraum in eine erste Unterdruckkammer und eine erste Arbeitskammer unterteilt, und einer zweiten beweglichen Wand, die den zweiten Verstärkerraum in eine zweite Unterdruckkammer und eine zweite Arbeitskammer unterteilt, wobei die zweite bewegliche Wand mit dem Steuerventilgehäuse mittels eines in der Trennwand abgedichtet geführten Führungsrohres verbunden ist, dadurch erreicht, daß der Außendurchmesser des Metalltopfes dem Innendurchmesser des Führungsrohres entspricht, daß der Metalltopf radiale Aussparungen aufweist, und daß die Halteklammer im Befestigungsbereich des Führungsrohres am Steuerventilgehäuse durch das Führungsrohr radial gesichert ist.

Nach einer anderen Ausführungsvariante des erfindungsgemäßen Unterdruck-Bremskraftverstärkers, bei dem der Metalltopf in einer im Steuerventilgehäuse ausgebildeten zylindrischen Ausnehmung angeordnet ist, wird die eingangs gestellte Aufgabe dadurch gelöst, daß der Boden der Ausnehmung einen ringförmigen Bund aufweist, dessen Höhe geringfügig größer als die Materialdicke des Metalltopfes ist und der eine Dichtfläche bildet, die mit der Reaktionsscheibe zusammenwirkt. Der Metalltopf ist dabei mittels eines im Steuerventilgehäuse radial einschiebbaren Haltegliedes axial gesichert, wodurch auch die Druckstange gegen Herausfallen gesichert ist.

Das Halteglied ist bei einer vorteilhaften Weiterbildung des Erfindungsgegenstandes U-förmig ausgebildet, wobei dessen Arme in im Steuerventilgehäuse ausgebildete Nuten mit radialer Vorspannung eingreifen, die durch zwei am Steuerventilgehäuse radial gegenüberliegend ausgebildete ringsegmentförmige Haltelemente begrenzt sind. Das Steuerventilgehäuse ist dabei im Bereich zwischen den Halteelementen mit bis zum Boden der Ausnehmung bzw. in den Bereich der Mündung von im Steuerventilgehäuse ausgebildeten Luftführungskanälen hin sich erstreckenden, axialen Ausschnitten versehen. Diese Maßnahmen ermöglichen ein Freihalten von großen Luftströmungsquerschnitten, wodurch die Lösezeiten des Bremskraftverstärkers erheblich verkürzt werden.

Eine bessere Führung des Steuerventilgehäuses bei einer Tandemausführung des erfindungsgemäßen Bremskraftverstärkers mit einer mit dem Steuerventilgehäuse mittels eines Führungsrohres verbundenen zweiten beweglichen Wand wird dadurch erreicht, daß das Halteglied mit Führungskanten versehen ist, die mit der Innenwandung des Führungsrohres Zusammenwirken.

Eine bauliche Vereinfachung es erfindungsgemäßen Unterdruck-Bremskraftverstärkers bringt ein weiteres Erfindungsmerkmal mit sich, nach dem der Metalltopf an seinem Rand mit mindestens zwei gegenüberliegenden Verriegelungsvorrichtungen versehen ist, die mit den am Steuerventilgehäuse ausgebildeten Halteelementen zusammenwirken.

Um schließlich eine Sicherung der Druckstange gegen Herausfallen gewährleisten zu können sieht die Erfindung vor, daß der Metalltopf in seinen zwischen den Verriegelungsvorrichtungen liegenden Randbereichen radiale Eindrückungen aufweist.

Weitere Einzelheiten und Vorteile des erfindungsgemäßen Unterdruck-Bremskraftverstärkers ergeben sich aus der nachfolgenden Beschreibung von drei Ausführungsbeispielen der Erfindung, die anhand der beiliegenden Zeichnung näher erläutert sind, wobei die einander entsprechenden Teile mit den gleichen Bezugszeichen versehen sind.

Es zeigt:
- Fig. 1: einen Längsschnitt durch einen Unterdruck-Bremskraftverstärker mit einer ersten Ausführung der Metalltopffixierung nach der Erfindung;
- Fig. 2: einen Längsschnitt durch einen Unterdruck-Bremskraftverstärker in Tandemausführung mit der ersten Ausführung der Metalltopffixierung nach der Erfindung;
- Fig. 3: eine Ansicht der Steuergruppe in Richtung des Pfeiles A von Fig. 2;
- Fig. 4: einen Teillängsschnitt B-B durch einen Unterdruck-Bremskraftverstärker mit einer zweiten Ausführung der Metalltopffixierung nach der Erfindung;
- Fig. 5: eine Teilansicht der Steuergruppe in Richtung des Pfeiles C in Fig. 4;
- Fig. 6: eine Draufsicht eines bei der zweiten Ausführung der erfindungsgemäßen Metalltopffixierung verwendeten Halteglieds und
- Fig. 7: eine perspektivische Darstellung einer dritten Ausführungsvariante der Erfindung.

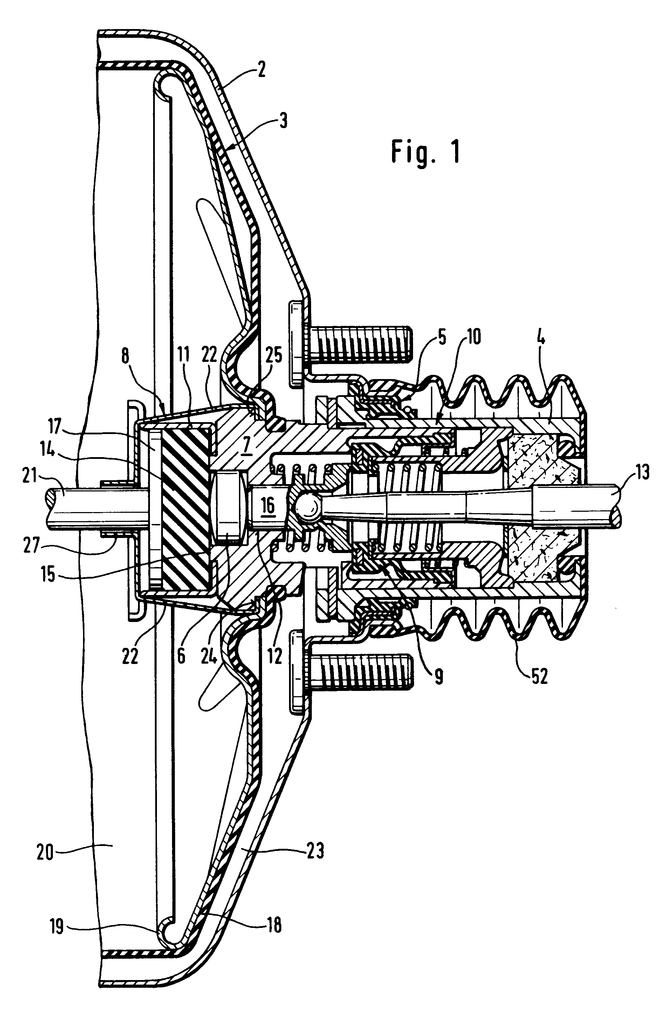

Das Gehäuse des in Fig. 1 gezeigten Unterdruck-Bremskraftverstärkers besteht aus zwei an einer Verbindungsstelle miteinander lancierten Gehäuseteilen, von denen, der besseren Übersichtlichkeit wegen, nur das bremspedalseitige Gehäuseteil 2 teilweise dargestellt ist. Der Innenraum des Gehäuses wird durch eine bewegliche Wand 3 in eine Unterdruckkammer 20, die über eine Anschlußbohrung mit einer Unterdruckquelle verbunden ist (nicht näher dargestellt) und eine Arbeitskammer 23 unterteilt. Die durch einen Membranteller 19 sowie eine in der Arbeitskammer 23 daran anliegende Rollmembran 18 gebildete bewegliche Wand 3 ist an einem im dargestellten Beispiel zweiteilig ausgebildeten Steuerventilgehäuse 10 befestigt, so, daß die Rollmembran 18 mit ihrem inneren Abschnitt den Innenrand des Membrantellers 19 umgreift und diesen gegenüber dem Steuerventilgehäuse 10 abdichtet. Das Steuerventilgehäuse 10 ragt mit seinem zylindrischen Führungsteil 4 aus dem Verstärkergehäuse 2 heraus und wird mittels eines Faltenbalges 52 gegen Verschmutzung seiner Oberfläche geschützt. Das Steuerventilgehäuse 10 dichtet mit einem Gleitführungsring 5 die Arbeitskammer 23 nach außen hin ab.

Im Inneren des Steuerventilgehäuses 10 ist eine aus Kolbenstange 13 und Ventilkolben 16 zusammengesetzte Steuerstange axial verschiebbar angeordnet, die über einen nicht näher dargestellten Gabelkopf mit einem Bremspedal eines Kraftfahrzeuges verbindbar ist. Das Steuerventilgehäuse 10 enthält ferner eine Steuerventilanordnung 9, die von dem Ventilkolben 16 betätigt wird und über Kanäle die Druckdifferenz zwischen Unterdruckkammer 20 und Arbeitskammer 23 steuert. Das in der Unterdruckkammer 20 angeordnete Vorderteil 7 des Steuerventilgehäuses 10 weist ferner eine Stufenbohrung 12 auf, die eine Übersetzungsscheibe 6 sowie den Ventilkolben 16 aufnimmt. An der Stirnseite des Vorderteils 7 ist mittels einer Haltekammer 8 ein Metalltopf 11 axial gehalten, in dem eine gummielastische Reaktionsscheibe 14 sowie eine Druckplatte 17 angeordnet sind, an der eine Druckstange 21 anliegt, die einen an der Stirnseite des Verstärkergehäuses befestigten, nicht näher dargestellten Hauptbremszylinder betätigt.

Die Anordnung des Metalltopfes 11 ist dabei vorzugsweise derart getroffen, daß er in seinem Boden mit einer Öffnung versehen ist, deren Durchmesser dem eines am Vorderteil 7 ausgebildeten, in den Metalltopf 11 hineingreifenden ringförmigen Bundes 15 entspricht. Die Höhe bzw. axiale Länge des Bundes 15 ist geringfügig größer als die Materialdicke des ihn umgebenden Bodens des Metalltopfes 11, so daß die Stirnfläche des Bundes 15 bei Betätigung als Dichtfläche mit der Reaktionsscheibe 14 zusammenwirkt. Die Halteklammer 8 ist als ein Stahlbügel ausgebildet, dessen Arme 22 mit ihren Enden zwei am Vorderteil 7 radial gegenüberliegend ausgebildete Vorsprünge 24,25 hintergreifen. Der Membranteller 19 ist dabei so gestaltet, daß er in seinem Befestigungsbereich am Vorderteil 7 des Steuerventilgehäuses 10 die die Vorsprünge 24,25 hintergreifenden Arme 22 des Stahlbügels 8 radial sichert.

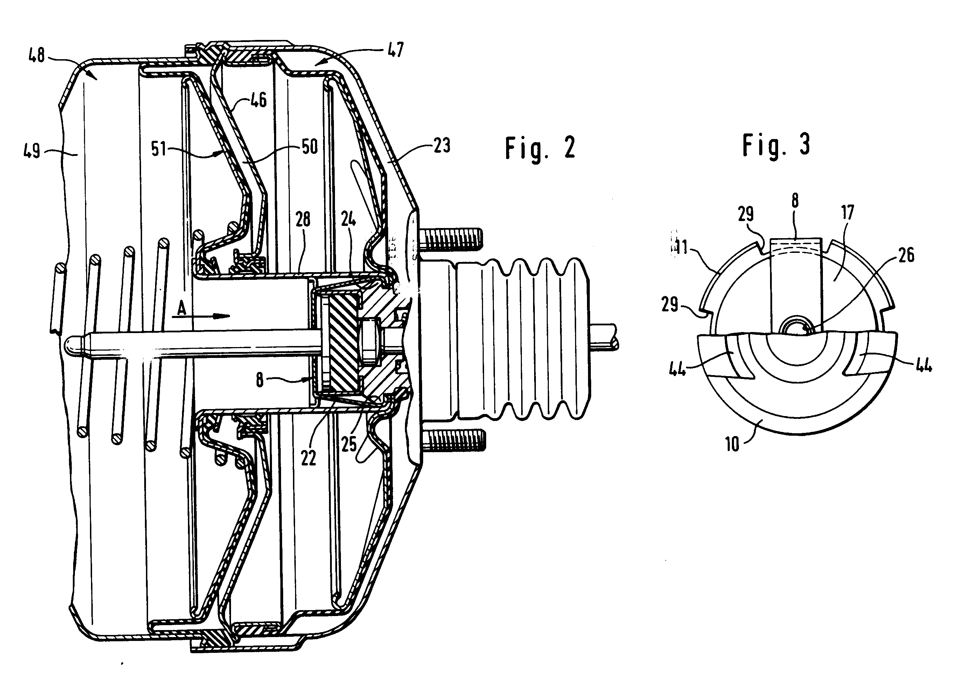

Außerdem ist der Stahlbügel 8 in seiner Mitte mit einer die Druckstange 21 aufnehmenden Öffnung 26 (Fig. 3) versehen, die in einen axial sich erstreckenden Führungsansatz 27 übergeht.

Der in Fig. 2 gezeigte Unterdruck-Bremskraftverstärker in Tandemausführung weist in seinem Gehäuse eine Trennwand 46 auf, die zwei Verstärkerräume 47,48 voneinander trennt. Eine den zweiten Verstärkerraum 48 in eine zweite Unterdruckkammer 49 und eine zweite Arbeitskammer 50 unterteilende zweite bewegliche Wand 51 steht mit dem Steuerventilgehäuse 10 in kraftübertragender Verbindung mittels eines in der Trennwand 46 abgedichtet geführten Führungsrohres 28, in dem der am Steuerventilgehäuse 10 axial anliegende Metalltopf 11 geführt ist. Der den an dessen Rand mit Aussparungen 29 versehenen Metalltopf 11 haltende Stahlbügel 8 bzw. seine Arme 22 sind im Befestigungsbereich des Führungsrohres 28 am Steuerventilgehäuse 10 durch radiale Anlage der Innenwandung des Führungsrohres 28 radial gesichert. Um ein Evakuieren der Arbeitskammern 23,50 zu ermöglichen, weist das Steuerventilgehäuse 10 in seinen zwischen den Vorsprüngen 24,25 liegenden Bereichen zwei radial gegenüberliegende Unterdruckkanäle 44 auf (Fig. 3, untere Hälfte).

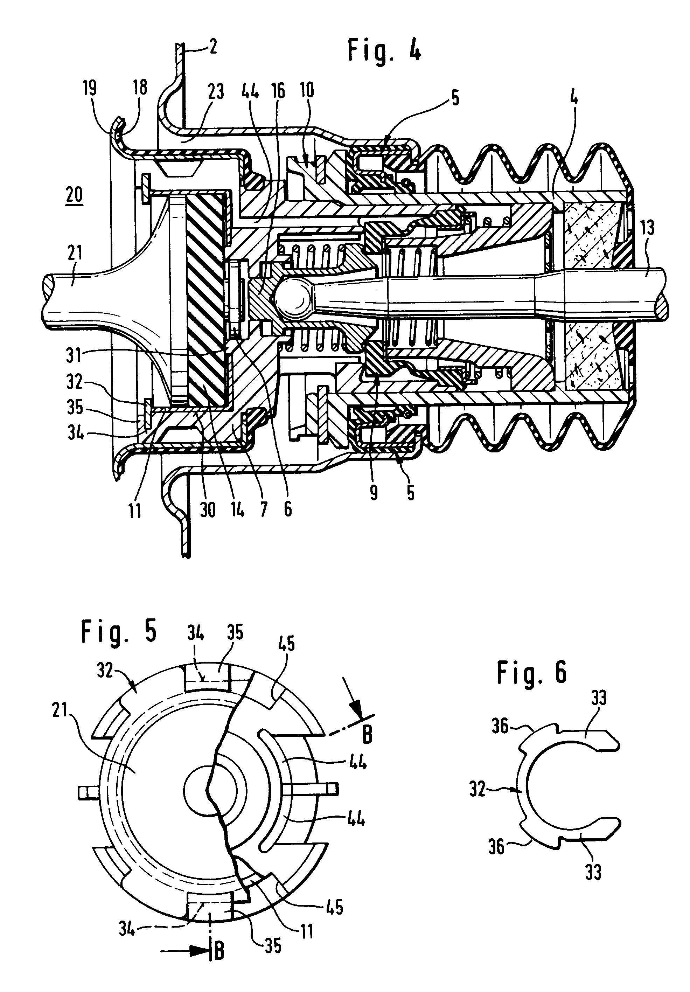

Bei der in den Figuren 4,5 und 6 gezeigten Ausführungsvariante des erfindungsgemäßen Unterdruck-Bremskraftverstärkers ist der Metalltopf 11 in einer im vorderteil 7 des Steuerventilgehäuses 10 ausgebildeten Ausnehmung 30 angeordnet, deren Boden einen vorstehenden ringförmigen Bund 31 aufweist. Der Bund 31, dessen Höhe bzw. axiale Länge geringfügig größer ist als die Materialdicke des Metalltopfes 11, wirkt mit der Reaktionsscheibe 14 zusammen und sorgt dadurch für eine einwandfreie Abdichtung der Unterdruckkammer 20 gegenüber der Arbeitskammer 23. Für eine axiale Sicherung bzw. Fixierung des im Steuerventilgehäuse 10 eingesetzten Metalltopfes 11 sorgt ein im Steuerventilgehäuse 10 radial einschiebbares Halteglied 32, das vorzugsweise U-förmig ausgebildet und mit zwei parallel zueinander verlaufenden Armen 33 versehen ist, die im montierten Zustand mit radialer Vorspannung in im Steuerventilgehäuse 10 ausgebildete Nuten 34 eingreifen.

Die Nuten 34 sind durch zwei am Vorderteil 7 radial gegenüberliegend ausgebildete ringsegmentförmige Haltelemente 35 begrenzt. Ist das U-förmige Halteglied 32 für den Einsatz bei einem mit dem vorhin erwähnten Führungsrohres 28 ausgestatteten Tandem-Bremskraftverstärker bestimmt, so ist es sinnvoll, dieses Halteglied 32 in seinem außerhalb der beiden Arme 33 liegenden Bereich mit Führungskanten 36 zu versehen, deren Kontur der Innenwandung des Führungsrohres 28 entspricht.

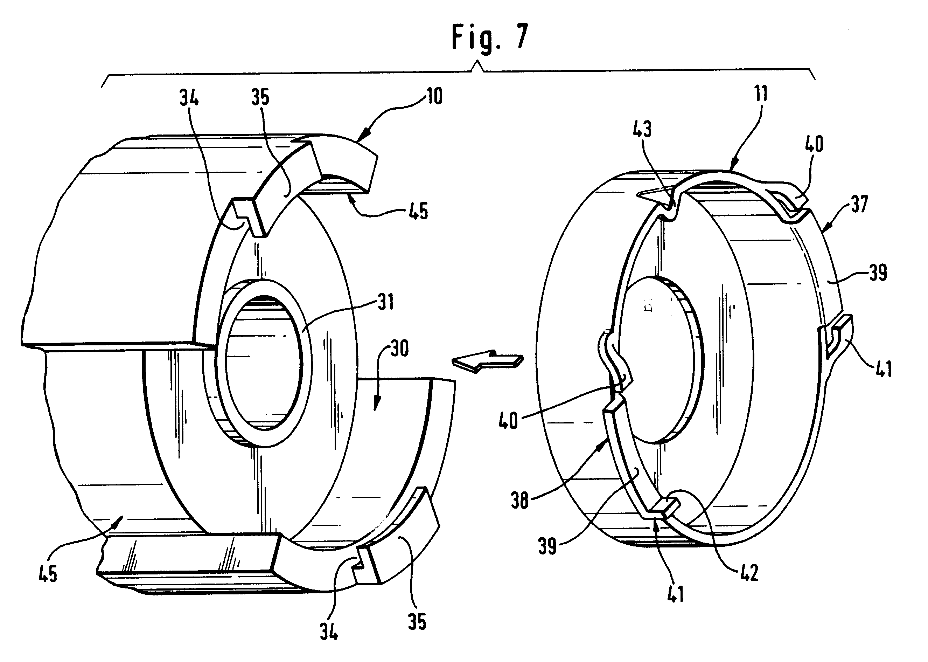

Der in der perspektivischen vereinfachten Darstellung der Steuergruppe des erfindungsgemäßen Unterdruck-Bremskraftverstärkers nach Fig. 7 gezeigte Metalltopf 11 ist schließlich an seinem Rand mit zwei gegenüberliegenden Verriegelungsvorrichtungen 37,38 ausgestattet, die im montierten Zustand mit den am lediglich teilweise dargestellten Steuerventilgehäuse 10 ausgebildeten Halteelementen 35 zusammenwirken. Jede Verriegelungsvorrichtung 37 bzw. 38 weist einen radial nach außen hin sich erstreckenden geraden Verriegelungsabschnitt 39, der nach dem Einsetzen des Metalltopfes 11 ins Steuerventilgehäuse 10 durch dessen Verdrehen in die durch das Halteelement 35 begrenzte Nut 34 eingeführt wird. Der Verriegelungsabschnitt 39 liegt vorzugsweise zwischen zwei Verdrehsicherungen 40,41, die z.B. als federnde Rasten (rechte Hälfte des Metalltopfes 11) ausgebildet sein können, die bei Verdrehen des Metalltopfes 11 durch den Eingriff mit den Halteelementen 35 heruntergedrückt werden und nach dem Einführen des Verriegelungsabschnittes 39 in die Nut 34 beidseitig des betreffenden Halteelementes 35 vorstehen. Der Abstand der beiden Rasten entspricht vorzugsweise etwa der Breite des Halteelementes 35.

Die in der Zeichnung linke Hälfte des Metalltopfes 11 zeigt eine geringfügig modifizierte Ausführung der Verriegelungsvorrichtung 38, bei der die eine Verdrehsicherung 40 durch eine federnde Raste gebildet ist, während die andere 41 als eine axial verlaufende, rechtwinklig zum Verriegelungsabschnitt 39 stehende Abstützfläche 42 ausgebildet ist, die mit dem Verriegellungsabschnitt 39 ein Teil bildet.

Um die in dieser Figur nicht gezeigte Druckstange gegen Herausfallen wirksam sichern zu können sind in den zwischen den Verriegelungsvorrichtungen 37 und 38 liegenden Randbereichen des Metalltopfes 11 radiale Eindrückungen vorgesehen, von denen in der Fig. 7 eine schematisch dargestellt und mit dem Bezugszeichen 43 versehen ist.

Um günstige Strömungsverhältnisse insbesondere beim Evakuieren der Arbeitskammer 23 zu schaffen, sind im Steuerventilgehäuse 10 im Bereich zwischen den Halteelementen 35 axiale Ausschnitte 45 vorgesehen, die sich bis zum Boden der Ausnehmung 30 bzw. in den Mündungsbereich der Luftführungskanäle 44 hin erstrecken.

## Patentansprüche

1. Unterdruck-Bremskraftverstärker für Kraftfahrzeuge, mit einem Gehäuse (2), das durch mindestens eine mittels einer Rückstellfeder vorgespannte axial bewegliche Wand (3) in mindestens eine Unterdruckkammer (20) und mindestens eine Arbeitskammer (23) dichtend unterteilt ist, mit einem mechanisch betätigbaren Steuerventil zur Verbindung der Arbeitskammer mit der Unterdruckkammer (20) bzw. mit der Atmosphäre, dessen axial bewegliches Steuerventilgehäuse (10) aus thermoplastischem Kunststoff ausgebildet ist und mit einem Metalltopf (11) versehen ist, der eine gummielastische Reaktionsscheibe (14) sowie eine daran anliegende Druckstange (21) aufnimmt, die die Bremskraft auf einen Betätigungskolben eines unterdruckseitig am Gehäuse (2) des Unterdruck-Bremskraftverstärkers angebrachten Hauptbremszylinders überträgt, wobei der Metalltopf (11) an der Stirnseite des Steuerventilgehäuses (10) axial abgestützt ist, dadurch **gekennzeichnet**, daß der Metalltopf (11) mittels einer Halteklammer (8) gehalten wird, die durch einen U-förmigen Stahlbügel gebildet ist, in dessen mittlerem Bereich eine Durchtrittsöffnung (26) für die Druckstange (21) ausgebildet ist und dessen Arme (22) mit ihren Enden zwei am Steuerventilgehäuse (10) radial gegenüberliegend ausgebildete Vorsprünge (24,25) hintergreifen.

2. Unterdruck-Bremskraftverstärker nach Anspruch 1, dadurch **gekennzeichnet,** daß der Bügel (8) im Bereich der Durchtrittsöffnung (26) mit einem sich axial erstreckenden Führungsansatz (27) versehen ist.

3. Unterdruck-Bremskraftverstärker nach Ansprüche 1 oder 2, dadurch **gekennzeichnet,** daß das Steuerventilgehäuse (10) im Abstützbereich des Metalltopfes (11) einen ringförmigen Bund (15) aufweist, dessen Höhe geringfügig großer als die Materialdicke des Metalltopfes (11) ist und der eine Dichtfläche bildet, die mit der Reaktionsscheibe (14) zusammenwirkt.

4. Unterdruck-Bremskraftverstärker nach Anspruch 1, dadurch **gekennzeichnet,** daß die Arme (22) des Stahlbügels (8) durch einen die bewegliche Wand (3) bildenden, am Steuerventilgehäuse (10) befestigten Membranteller (19) radial gesichert sind.

5. Unterdruck-Bremskraftverstärker, nach einem der Ansprüche 1 bis 3, dessen Gehäuse durch eine Trennwand (46) in einen vorderen und einen hinteren Verstärkerraum (47,48) unterteilt ist, mit einer am Steuerventilgehäuse angeordneten ersten beweglichen Wand, die den vorderen Verstärkerraum in eine erste Unterdruckkammer und eine erste Arbeitskammer unterteilt, und einer zweiten beweglichen Wand (51), die den zweiten Verstärkerraum (48) in eine zweite Unterdruckkammer (49) und eine zweite Arbeitskammer (50) unterteilt, wobei die zweite bewegliche Wand (51) mit dem Steuerventilgehäuse mittels eines in der Trennwand abgedichtet geführten Führungsrohres (28) verbunden ist, dadurch **gekennzeichnet,** daß der Außendurchmesser des Metalltopfes (11) dem Innendurchmesser des Führungsrohres (28) entspricht, daß der Metalltopf (11) radiale Aussparungen (29) aufweist und daß die Halteklammer (8) im Befestigungsbereich des Führungsrohres (28) am Steuerventilgehäuse (10) durch das Führungsrohr (28) radial gesichert ist.

6. Unterdruck-Bremskraftverstärker für Kraftfahrzeuge, mit einem Gehäuse (2) , das durch mindestens eine mittels einer Rückstellfeder vorgespannte axial bewegliche Wand (3) in mindestens eine Unterdruckkammer (20) und mindestens eine Arbeitskammer (23) dichtend unterteilt ist, mit einem mechanisch betätigbaren Steuerventil (9) zur Verbindung der Arbeitskammer (23) mit der Unterdruckkammer (20) bzw. mit der Atmosphäre, dessen axial bewegliches Steuerventilgehäuse (10) aus thermoplastischem Kunststoff ausgebildet ist und mit einem Metalltopf (11) versehen ist, der in einer im Steuerventilgehäuse (10) ausgebildeten zylindrischen Ausnehmung (30) angeordnet ist und eine gummielastische Reaktionsscheibe (14) sowie eine daran anliegende Druckstange (21) aufnimmt, die die Bremskraft auf einen Betätigungskolben eines unterdruckseitig am Gehäuse (2) des Unterdruck-Bremskraftverstärkers angebrachten Hauptbremszylinders überträgt, dadurch **gekennzeichnet,** daß der Boden der Ausnehmung (30) einen ringförmigen Bund (31) aufweist, dessen Höhe geringfügig größer als die Materialdicke des Metalltopfes (11) ist und der eine Dichtfläche bildet, die mit der Reaktionsscheibe (14) zusammenwirkt.

7. Unterdruck-Bremskraftverstärker nach Anspruch 6, dadurch **gekennzeichnet,** daß der Metalltopf (11) mittels eines im Steuerventilgehäuse (10) radial einschiebbaren Haltegliedes (32) axial gesichert ist.

8. Unterdruck-Bremskraftverstärker nach Anspruch 7, dadurch **gekennzeichnet,** daß das Halteglied (32) U-förmig ausgebildet ist, wobei dessen Arme (33) in im Steuerventilgehäuse (10) ausgebildete Nuten (34) mit radialer Vorspannung eingreifen.

9. Unterdruck-Bremskraftverstärker nach Anspruch 8, dadurch **gekennzeichnet,** daß die Nuten (34) durch zwei am Steuerventilgehäuse (10) radial gegenüberliegend ausgebildete, ringsegmentförmige Halteelemente (35) begrenzt sind.

10. Unterdruck-Bremskraftverstärker nach Anspruch 7 bis 9, mit einer mit dem Steuerventilgehäuse mittels eines Führungsrohres verbundenen zweiten beweglichen Wand, dadurch **gekennzeichnet,** daß das Halteglied (32) mit Führungskanten (36) versehen ist, die mit der Innenwandung des Führungsrohres (28) zusammenwirken.

11. Unterdruck-Bremskraftverstärker nach Anspruch 6, dadurch **gekennzeichnet,** daß der Metalltopf (11) an seinem Rand mit mindestens zwei gegenüberliegenden Verriegelungsvorrichtungen (37,38) versehen ist, die mit den am Steuerventilgehäuse (10) ausgebildeten Halteelementen (35) zusammenwirken.

12. Unterdruck-Bremskraftverstärker nach Anspruch 11, dadurch **gekennzeichnet,** daß jede Verriegelungsvorrichtung (37,38) durch einen radialen Verriegelungsabschnitt (39) sowie zwei Verdrehsicherungen (40,41) gebildet ist, wobei im montierten Zustand der Verriegelungsabschnitt (39) das Kalteelement (35) hintergreift und die Verdrehsicherungen (40,41) beidseitig des betreffenden Haltelementes (35) vorstehen.

13. Unterdruck-Bremskraftverstärker nach Anspruch 12, dadurch **gekennzeichnet,** daß beide Verdrehsicherungen (40,41) als federnde Rasten ausgebildet sind.

14. Unterdruck-Bremskraftverstärker nach Anspruch 12, dadurch **gekennzeichnet,** daß eine (40) der beiden Verdrehsicherungen (40,41) als eine federnde Raste ausgebildet ist, während die andere (41) durch eine mit dem Verriegelungsabschnitt (39) einteilig ausgebildete, rechtwinklig zu ihm stehende axiale Abstützfläche (42) gebildet ist.

15. Unterdruck-Bremskraftverstärker nach einem der Ansprüche 11 bis 14, dadurch **gekennzeichnet,** daß der Metalltopf (11) in seinen zwischen den Verriegelungsvorrichtungen (37,38) liegenden Randbereichen radiale Eindrückungen (43) aufweist.

16. Unterdruck-Bremskraftverstärker nach Anspruch 9 oder 11, dadurch **gekennzeichnet,** daß das Steuerventilgehäuse (10) im Bereich zwischen den Halteelementen (35) mit, bis zum Boden der Ausnehmung (30) bzw. in den Bereich der Mündung von im Steuerventilgehäuse (10) ausgebildeten Luftführungskanälen (44) hin sich erstreckenden, axialen Ausschnitten (45) versehen ist.

## Claims

1. A vacuum brake power booster for automotive vehicles, with a housing (2) which is sealingly subdivided into at least one vacuum chamber (20) and at least one power chamber (23) by at least one movable wall (3) being prestressed by means of a return spring, with a mechanically actuatable control valve to connect said power chamber to said vacuum chamber (20), respectively to the atmosphere and whose axially movable control valve housing (10) is made of thermoplastic material and is furnished with a metal cup (11) which accommodates a reaction disc (14) of high-elasticity material and a push rod (21) abutted against it, said push rod transmitting the brake power to an actuating piston of a master brake cylinder which is positioned on the vacuum side at the housing (2) of the vacuum brake power booster, said metal cup (11) being axially supported at the front side of said control valve housing (10),
**characterized** in that the said metal cup (11) is retained by means of a retaining clip (8) being formed by a U-shaped steel bracket in whose centre range a through opening (26) is configurated for the said push rod (21) and whose arms (22) make grip with their ends behind two projections (24, 25) being configurated radially opposite each other at the said control valve housing (10).

2. A vacuum brake power booster as claimed in claim 1, **characterized** in that the said bracket (8) is formed with an axially extending guide attachment (27) in the range of the said through opening (26).

3. A vacuum braker power booster as claimed in claim 1 or in claim 2, **characterized** in that in the range of support of the said metal cup (11), the said control valve housing (10) is provided with an annular collar (15) whose height is slightly larger than the material thickness of the said metal cup (11) and which forms a sealing surface that interacts with the said reaction disc (14).

4. A vacuum brake power booster as claimed in claim 1, **characterized** in that the said arms (22) of the said steel bracket (8) are radially secured by a diaphragm disc (19) which forms the said movable wall (3) and which is fixed to the said control valve housing (10).

5. A vacuum brake power booster as claimed in anyone of claims 1 to 3, whose housing is subdivided by a partition wall (46) into a front and a rear booster chamber (47, 48), with a first movable wall being positioned at the said control valve housing and subdividing the said front booster chamber into a first vacuum chamber and a first power chamber, and with a second movable wall (51) which subdivides the said second booster chamber (48) into a second vacuum chamber (49) and a second power chamber (50), the said second movable wall (51) being connected to the said control valve housing by means of a guide tube (28) being sealedly guided in the said partition wall, **characterized** in that the outside diameter of the said metal cup (11) corresponds to the inside diameter of the said guide tube (28), in that the said metal cup (11) is formed with radial cutouts (29), and in that in the range of fixation of the said guide tube (28) to the said control valve housing (10), the said retaining clip (8) is secured in radial direction by the said guide tube (28).

6. A vacuum brake power booster for automotive vehicles, with a housing (2) which is sealingly subdivided into at least one vacuum chamber (20) and at least one power chamber (23) by at least one axially movable wall (3) being prestressed by means of a return spring, with a mechanically actuatable control valve (9) to connect the said power chamber (23) to the said vacuum chamber (20), respectively to the atmosphere and whose axially movable control valve housing (10) is made of thermosplastic material and is furnished with a metal cup (11) which is positioned in a cylindrical recess (30) configurated in the said control valve housing (10) and which accommodates a reaction disc (14) of high-elasticity material and a push rod (21) abutted against it, said push rod transmitting the brake power to an actuating piston of a master brake cylinder which is positioned on the vacuum side at the housing (2) of the vacuum brake power booster, **characterized** in that the bottom of the said recess (30) is furnished with an annular collar (31) whose height is slightly larger than the material thickness of the said metal cup (11) and which forms a sealing surface that interacts with the said reaction disc (14).

7. A vacuum brake power booster as claimed in claim 6, **characterized** in that the said metal cup (11) is secured in axial direction by means of a retaining member (32) which is slidable into the said control valve housing (10) in radial direction.

8. A vacuum brake power booster as claimed in claim 7, **characterized** in that the said retaining member (32) has a U-shaped configuration, its arms (33) engaging grooves (34) being provided in the said control valve housing (10) with a prestress in radial direction.

9. A vacuum brake power booster as claimed in claim 8, **characterized** in that the said grooves (34) are bounded by two annular segment-shaped retaining elements (35) being configurated radially opposite each other at the said control valve housing (10).

10. A vacuum brake power booster as claimed in claims 7 to 9, with a second movable wall being connected to the said control valve housing by means of a guide tube, **characterized** in that the said retaining member (32) is formed with guide edges (36) which interact with the inside wall of the said guide tube (28).

11. A vacuum brake power booster as claimed in claim 6, **characterized** in that the said metal cup (11) is provided at its edge with at least two locking apparatuses (37, 38) arranged opposite each other which interact with the said retaining elements (35) that are configurated at the said control valve housing (10).

12. A vacuum brake power booster as claimed in claim 11, **characterized** in that each said locking apparatus (37, 38) is comprised of a radial locking section (39) and of two antirotating means (40, 41), the said locking section (39) in the assembled condition making catch behind the said retaining element (35) and the said antirotating means (40, 41) projecting on either side of the associated said retaining element (35).

13. A vacuum brake power booster as claimed in claim 12, **characterized** in that both said antirotating means (40, 41) are configurated in the shape of spring notches.

14. A vacuum brake power booster as claimed in claim 12, **characterized** in that one (40) of the said two antirotating means (40, 41) is configurated as a spring notch, while the other said antirotating means (41) is constituted by an axial supporting area (42) which forms one part with the said locking section (39) and which is positioned at right angle to it.

15. A vacuum brake power booster as claimed in anyone of claims 11 to 14, **characterized** in that the said metal cup (11) is furnished with radial depressions (43) in its edge ranges positioned between the said locking apparatuses (37, 38).

16. A vacuum brake power booster as claimed in claim 9 or in claim 11, **characterized** in that in the range between the said retaining elements (35), the said control valve housing (10) is furnished with axial cutouts (45) extending down to the bottom of the said recess (30), respectively into the range of the mouth of air guide ducts (44) being configurated in the said control valve housing (10).

## Revendications

1. Amplificateur d'effort de freinage à dépression pour véhicule automobile, comprenant, d'une part, un boîtier (2) qui est divisé d'une manière étanche en au moins une chambre à dépression (20) et au moins une chambre de travail (23) par au moins une paroi (3) mobile axialement et soumise à une précontrainte au moyen d'un ressort de rappel et, d'autre part, une valve de commande qui est agencée de façon à pouvoir être actionnée mécaniquement et qui sert à faire communiquer la chambre de travail avec la chambre à dépression (20) ou avec l'atmosphère et dont le boîtier (10), mobile axialement, est réalisé en matière thermoplastique et est pourvu d'une cuvette métallique (11) servant à loger un disque de réaction (14) à élasticité du type de celle du caoutchouc et une tige de pression qui prend appui sur ce disque de réaction et qui transmet la force de freinage à un piston d'actionnement d'un maître-cylindre de frein monté sur le boîtier (2) de l'amplificateur d'effort de freinage à dépression du côté de la dépression, la cuvette métallique (11) prenant appui axialement sur la face frontale du boîtier (10) de la valve de commande, caractérisé en ce que la cuvette métallique (11) est maintenue au moyen d'une pince de maintien (8) formée d'un étrier en acier en U dans la partie centrale duquel une ouverture de passage (26) est ménagée pour la tige de pression (21) et dont les branches (22) viennent en prise par leurs extrémités derrière deux saillies (24, 25) formées d'une manière diamétralement opposée sur le boîtier (10) de la valve de commande.

2. Amplificateur d'effort de freinage à dépression suivant la revendication 1, caractérisé en ce que, dans la zone de l'ouverture de passage (26), l'étrier (8) est pourvu d'une saillie de guidage (27) s'étendant axialement.

3. Amplificateur d'effort de freinage à dépression suivant la revendication 1 ou 2, caractérisé en ce que, dans la zone d'appui de la cuvette métallique (11), le boîtier (10) de la valve de commande comporte un collet annulaire (15) dont la hauteur est légèrement supérieure à l'épaisseur du matériau de la cuvette métallique (11) et qui forme une surface d'étanchéité coopérant avec le disque de réaction (14).

4. Amplificateur d'effort de freinage à dépression suivant la revendication 1, caractérisé en ce que les branches (22) de l'étrier en acier (8) sont immobilisées radialement par un plateau à membrane (19) qui constitue la paroi mobile (3) et qui est fixé sur le boîtier (10) de la valve de commande.

5. Amplificateur d'effort de freinage à dépression suivant l'une des revendications 1 à 3, dont le boîtier est divisé par une cloison séparatrice (46) en une chambre avant d'amplificateur (47) et une chambre arrière d'amplificateur (48) et qui comprend une première paroi mobile, disposée sur le boîtier de la valve de commande et divisant la chambre avant d'amplificateur en une première chambre à dépression et une première chambre de travail, et une seconde paroi mobile (51) divisant la seconde chambre d'amplificateur (48) en une seconde chambre à dépression (49) et une seconde chambre de travail (50), cette seconde paroi mobile (51) étant reliée au boîtier de la valve de commande au moyen d'un tube de guidage (28) qui est guide d'une manière étanche à travers la cloison séparatrice, caractérisé en ce que le diamètre extérieur de la cuvette métallique (11) est égal au diamètre intérieur du tube de guidage (28), en ce que la cuvette métallique (11) comporte des évidements radiaux (29) et en ce que, dans la zone de fixation du tube de guidage (28) sur le boîtier (10) de la valve de commande, la pince de maintien (8) est immobilisée radialement par ce tube de guidage (28).

6. Amplificateur d'effort de freinage à dépression pour véhicule automobile comprenant, d'une part, un boîtier (2) qui est divisé d'une manière étanche en au moins une chambre à dépression (20) et au moins une chambre de travail (23) par au moins une paroi (3) mobile axialement et soumise à une précontrainte au moyen d'un ressort de rappel et, d'autre part, une valve de commande (9) qui est agencée de façon à pouvoir être actionnée mécaniquement et qui sert à faire communniquer la chambre de travail (23) avec la chambre à dépression (20) ou avec l'atmosphère et dont le boîtier (10), mobile axialement, est réalisé en matière thermoplastique et est pourvu d'une cuvette métallique (11) qui est disposée dans une cavité cylindrique (30) ménagée dans le boîtier (10) de la valve de commande et qui sert à loger un disque de réaction (14) à élasticité du type de celle du caout-chouc, et une tige de pression qui prend appui sur ce disque de réaction et qui transmet la force de freinage à un piston d'actionnement d'un maître-cylindre de [rein monté sur le boîtier (2) de l'amplificateur d'effort de freinage à dépression du côté de la dépression, caractérisé en ce que le fond de la cavité (30) comporte un collet annulaire (31) dont la hauteur est légèrement supérieure à l'épaisseur du matériau de la cuvette métallique (11) et qui comporte une surface d'étanchéité qui coopère avec le disque de réaction (14).

7. Amplificateur d'effort de freinage à dépression suivant la revendication 6, caractérisé en ce que la cuvette métallique (11) est immobilisée axialement au moyen d'un organe de maintien (32) agencé de façon à pouvoir être emboîté radialement dans le boîtier (10) de la valve de commande.

8. Amplificateur d'effort de freinage à dépression suivant la revendication 7, caractérisé en ce que l'organe de maintien (32) a la forme d'un U dont les branches (33) s'emboîtent, avec une précontrainte radiale, dans des rainures (34) ménagées dans le boîtier (10) de la valve de commande.

9. Amplificateur d'effort de freinage à dépression suivant la revendication 8, caractérisé en ce que les rainures (34) sont délimitées par deux éléments de maintien (35) en forme de segment annulaire qui sont réalisés d'une manière diamétralement opposée sur le boîtier (10) de la valve de commande.

10. Amplificateur d'effort de freinage à dépression suivant l'une des revendications 7 à 9, comprenant une seconde paroi mobile reliée au boîtier de la valve de commande au moyen d'un tube de guidage, caractérisé en ce que l'organe de maintien (32) est pourvu de flancs de guidage (36) qui coopèrent avec la surface intérieure du tube de guidage (28).

11. Amplificateur d'effort de freinage à dépression suivant la revendication 6, caractérisé en ce que la cuvette métallique (11) est pourvue, sur son bord, d'au moins deux dispositifs de verrouillage (37,38) diamétralement opposés qui coopèrent avec les éléments de maintien (35) réalisés sur le boîtier (10) de la valve de commande.

12. Amplificateur d'effort de freinage à dépression suivant la revendication 11, caractérisé en ce que chaque dispositif de verrouillage (37,38) est formé d'une section radiale de verrouillage (39) et de deux éléments de blocage en rotation (40, 41) et en ce qu'à l'état monté, la section de verrouillage (39) vient en prise derrière l'élément de maintien (35) et les éléments de blocage en rotation (40,41) font saillie de part et d'autre de l'élément de maintien (35) correspondant.

13. Amplificateur d'effort de freinage à dépression suivant la revendication 12, caractérisé en ce que les deux éléments de blocage en rotation (40, 41) sont réalisés sous la forme d'arrêts élastiques.

14. Amplificateur d'effort de freinage à dépression suivant la revendication 12, caractérisé en ce que l'un (40) des deux éléments de blocage en rotation (40, 41) est réalisé sous la forme d'un arrêt élastique, tandis que l'autre élément (41) est formé par une surface axiale d'appui (42) réalisée d'une pièce avec la section de verrouillage (39) et perpendiculaire à cette section.

15. Amplificateur d'effort de freinage à dépression suivant l'une des revendications 11 à 14, caractérisé en ce que, dans les zones de son bord qui sont situées entre les dispositifs de verrouillage (37, 38), la cuvette métallique (11) comporte des parties repoussées radialement (43).

16. Amplificateur d'effort de freinage à dépression suivant la revendication 9 ou 11, caractérisé en ce que, dans la zone située entre les éléments de maintien (35), le boîtier (10) de la valve de commande est pourvu d'évidements axiaux (45) s'étendant jusqu'au fond de la cavité (30) ou dans la zone où débouchent des conduits de guidage d'air (44) réalisés dans ce boîtier (10) de la valve de commande.
